# EUROPEAN PATENT SPECIFICATION

(11) **EP 4 410 448 B1**
(45) Date of publication and mention of the grant of the patent: **20.11.2024**
(21) Application number: 23162219.2
(22) Date of filing: 16.03.2023
(51) Int. Cl.: B21J 1/06, B21J 3/00, B21J 5/08, B21K 1/46, B21K 27/04, B21K 29/00, B21J 9/06

(54) **APPARATUS FOR HOT UPSETTING FORMING OF FASTENER**
VORRICHTUNG ZUM WARMSTAUCHFORMEN VON BEFESTIGUNGSELEMENTEN
APPAREIL POUR FORMER UN ÉLÉMENT DE FIXATION PAR REFOULAGE À CHAUD

(30) Priority: 02.02.2023 CN 202310052060
(43) Date of publication of application: 07.08.2024
(73) Proprietor: Oriental Bluesky Titanium Technology Co. Ltd, Yantai Hi-tech Industrial Development Zone Yantai Shandong 264003 (CN)
(72) Inventor: QIAN, Yu, Shandong, 264003 (CN); SUN, Kai, Shandong, 264003 (CN); LI, Xizhi, Shandong, 264003 (CN); LV, Nianhua, Shandong, 264003 (CN); SUN, Jingyuan, Shandong, 264003 (CN); SUN, Haoning, Shandong, 264003 (CN); HUANG, Xing, Shandong, 264003 (CN); LIU, Jiahui, Shandong, 264003 (CN)
(74) Representative: Ipside

(56) References cited:
- CN-A- 101 758 159
- CN-A- 107 282 835
- CN-A- 112 548 014
- CN-A- 114 833 292
- CN-U- 214 023 330
- CN-U- 214 488 721
- CN-U- 216 780 220
- RU-U1- 193 995

## Description

### Technical Field

The present invention relates to the technical field of hot upsetting forming apparatuses, and in particular, to an apparatus for hot upsetting forming of a fastener.

### Background

A hot upsetting process is a process in which a part to be machined is heated at a certain temperature by a high-frequency furnace or another heating apparatus, and then the heated workpiece is placed into a press for upsetting forming by means of a die. Fasteners may be a collection of bolts, screws, etc. When fasteners are machined by a hot upsetting process, there are at least the following difficulties: (1) the fasteners are small in size, and it is difficult for an operator to quickly clamp the fasteners; (2) the fasteners are usually machined in batches, a large number of fasteners are machined, and machining with human assistance would results in increased costs and inefficiency; and (3) the heating temperature is high, and a danger coefficient is high.

Patent document CN 214023330 U, forming the basis for the preamble of claim 1, discloses an automatic feeding device and a hot heading punching machine. The automatic feeding device provided is suitable for hot heading punching machines, including: workpiece support plate, feeding mechanism, pushing mechanism, robot mechanism, and heating mechanism; A first workpiece groove is opened on the workpiece support plate, and one side of the first workpiece groove is equipped with a feeding mechanism for conveying workpieces, while the other side is equipped with a heating mechanism for heating workpieces; The pushing mechanism is used to push the workpiece conveyed by the feeding mechanism into the first workpiece groove; Robot mechanism, used to clamp the workpiece in the first workpiece slot and feed the workpiece into the hot heading punch.

A second patent document CN 214488721 U discloses a fully automatic hot heading bolt production equipment, which includes a feeding device, a first mechanical arm, a coil induction heater, a temperature measuring device, a second mechanical arm, a hot heading machine, and a cutting table; The feeding device sequentially comprises a feeding platform, a lifting machine, and a conveyor. The feeding platform is fixedly connected to the lifting machine, and a part rod is placed in the feeding platform; The temperature measuring device includes a support frame, and the top of the support frame is fixedly connected to a flat plate. A storage platform is fixedly connected to the flat plate, and a temperature measuring instrument is installed on the front side of the storage platform. The temperature measuring instrument is fixedly connected to the flat plate through a connecting plate.

A third patent document CN 112548014 A discloses a molding device for hexagonal bolts, comprising a side bracket, a molding device, and a posture detection device; The molding device comprises a stamping die installed on a workbench; A mold mouth is provided on the stamping die for placing bar materials; A posture detection device is installed at the mold mouth to detect the inclination of the bar material; The attitude detection device is electrically connected to the signal input terminal of the PLC controller; The signal output terminal of the PLC controller is electrically connected to the alarm.

The fourth patent document CN 107282835 A discloses An industrial robot intelligent forging line system, control system, control method, and abnormal self diagnosis and processing method. When the components in the system cannot work normally due to their own service life or other reasons, the system can automatically detect and stop the operation of the system; When the grippers of the first and second robots are unable to pick up the workpiece properly due to loosening or other reasons, the system can automatically detect and stop the operation of the system; When the first robot and the second robot drop the workpiece during transportation due to motion and loosening of the gripper, the system can automatically detect and promptly handle the fault; When the workpiece falls from the die of the upsetting punch and press due to vibration and other reasons during the upsetting process, the system can automatically detect and promptly handle the fault.

Based on the above shortcomings, the patent publication No. CN 214488721 U discloses a fully automatic hot upsetting bolt production apparatus, which is mainly composed of a feeding device, a first manipulator, a coil inductor, a temperature measuring device, a second manipulator, a press, and a discharging table. An automatic machining method is adopted in the production apparatus mentioned in the patent, and improves the machining efficiency. However, this apparatus has the following disadvantages: (1) the apparatus has an unreasonable layout, and occupies an excessive workshop area; (2) the same manipulator needs to carry out feeding and discharging, which limits the machining efficiency; and (3) parts to be machined need to be placed by human in a specific order before machining, such that the first manipulator can accurately grasp the parts.

### Summary

Objective of the Invention: In order to overcome the shortcomings existing in the prior art and further improve machining efficiency, the present invention provides an apparatus for hot upsetting forming of a fastener.

Technical Solution: To achieve the above objective, the apparatus for hot upsetting forming of a fastener according to the present invention comprises:
a heating assembly, the heating assembly comprising a frame, and a first manipulator, a second manipulator, a vibratory inline feeder and a heating device that are fixed to the frame, wherein the vibratory inline feeder is provided with a magazine, the heating device is provided with a heating station for heating a workpiece, the first manipulator is configured to transfer the workpiece from the magazine to the heating station of the heating device, and the second manipulator is configured to transfer the workpiece from the heating station of the heating device to a hot upsetting station of a hot upsetting assembly; and
the hot upsetting assembly, the hot upsetting assembly comprising a hot upsetting machine, and a third manipulator and a fourth manipulator that are fixed to the hot upsetting machine, wherein the hot upsetting machine is connected to a die for fixing the workpiece, the third manipulator is configured to spray a lubricant to a workpiece to be machined, and the fourth manipulator is configured to transfer the workpiece from the die to the workbin.

According to the invention, the heating assembly further comprises a first measurement device, a second measurement device, a third measurement device, and a fourth measurement device, wherein the first measurement device is arranged above the magazine, and is configured to measure the number and placement positions of workpieces; and the second measurement device is configured to measure the size and orientation of a workpiece, the third measurement device is configured to measure the temperature of the workpiece when a product is in the heating device, and the fourth measurement device is arranged on a side of the hot upsetting assembly, and is configured to detect whether the second manipulator properly places the workpiece into the die of the hot upsetting machine.

Preferably, the third measurement device comprises an infrared detector, a support, a first base, a second base, a third base, and a fourth base, wherein the support is fixed to the frame, the first base is rotatably connected to the support, the second base is slidably connected to the first base, the third base is slidably connected to the second base, the fourth base is slidably connected to the third base, and sliding directions of the second base, the third base and the fourth base are perpendicular to each other; and the infrared detector is fixed to the fourth base.

Preferably, the heating device comprises a heater, a heating coil, a supporting rod, and a pressing rod, wherein the heating coil is electrically connected to the heater, and wherein the heating coil is in a form of a spiral barrel, the workpiece is placed in the heating coil, the supporting rod is arranged at the bottom of the heating coil, the pressing rod is arranged on an upper portion of the heating coil, and the supporting rod and the pressing rod are movable up and down to clamp the workpiece.

Preferably, a vibrating feeding box is arranged on a side of the vibratory inline feeder, and the vibrating feeding box is capable of conveying the workpiece into the magazine by means of vibration.

Preferably, two sprayers are connected to an end of the third manipulator, the sprayers are movable upwards or downwards independently, the sprayers communicates with a bucket filled with the lubricant, and the sprayers are configured to spray the lubricant to the die, the lubricant being powdered molybdenum disulfide.

Preferably, the workbin comprises a workbin body, a guide plate, a funnel, and a Hall sensor, wherein the funnel is fixed to the hot upsetting machine, the box body is arranged below the funnel, the guide plate is obliquely arranged, with one end thereof close to the funnel and the other end close to the box body, and the Hall sensor is configured to detect whether the workpiece falls.

Preferably, a heating die sleeve is connected to an outer side of the die of the hot upsetting machine, the heating die sleeve is provided with a connector, the connector communicates with a die temperature machine, the heating die sleeve is configured to keep the die at a constant temperature, and an ejector mechanism is arranged below the die of the hot upsetting machine.

The apparatus for hot upsetting forming of a fastener according to the present invention provides at least the following technical effects.
(1) Feeding in which a storage device and a vibratory inline feeder are combined is used in the present invention, the storage device allows for an increase in the storage of products, and the storage device can convey the products into the vibratory inline feeder regularly or quantitatively, thereby saving the time for manual feeding for many times.
(2) The apparatus is composed of the heating assembly and the hot upsetting assembly, wherein the first manipulator is configured to feed a workpiece to a heating position, the second manipulator is configured to transfer the workpiece from the heating assembly to the hot upsetting assembly, the third manipulator is configured to spray the lubricant to lubricate the workpiece, and the fourth manipulator is configured to transfer a formed workpiece into the workbin. The four manipulators cooperate to reduce an angle of movement of each manipulator, provide higher operating efficiency and a rational overall layout, and occupy small space.
(3) The first measurement device, by means of visual positioning, can cooperate with the first manipulator to properly grab disordered workpieces, select products with non-uniform head shapes and lengths, etc., identify the number of products in the vibratory inline feeder, and control the vibratory inline feeder for feeding when a relatively small number of workpieces are provided.
(4) The third manipulator for spraying molybdenum disulfide is arranged in the hot upsetting assembly, and the third manipulator is connected to two nozzles that can move simultaneously or independently, such that molybdenum disulfide is sprayed to lubricate the hot upsetting die, and the sprayed amount of molybdenum disulfide can be pneumatically adjusted, thereby saving manual lubrication time and improving the machining quality of workpieces.
(5) The heating die sleeve for heating the die is arranged in the hot upsetting assembly, and is in communication with the die temperature machine to control the temperature of the die, so as to keep the die at a constant temperature and reduce impacts on the product performance caused by the temperature rise of the die due to friction during machining.

### Brief Description of the Drawings

FIG. 1 is a schematic structural diagram of the present invention;
FIG. 2 is a schematic structural diagram of a heating assembly according to the present invention;
FIG. 3 is a schematic structural diagram of a heater according to the present invention;
FIG. 4 is a schematic structural diagram of a hot upsetting assembly according to the present invention;
FIG. 5 is a schematic structural diagram showing cooperation between a third manipulator and a fourth manipulator according to the present invention;
FIG. 6 is a schematic structural diagram showing connections between a fourth manipulator and sprayers according to the present invention;
FIG. 7 is a schematic structural diagram of a second measurement device according to the present invention;
FIG. 8 is a schematic structural diagram showing a connection between a heating die sleeve and a die according to the present invention; and
FIG. 9 is a schematic structural diagram of an ejector mechanism according to the present invention.

In the drawings, 1. Heating assembly; 2. Frame; 3. First manipulator; 4. Second manipulator; 5. Feeding box; 6. Heating device; 7. Hot upsetting assembly; 8. Hot upsetting machine; 9. Third manipulator; 10. Fourth manipulator; 11. Workbin; 12. First measurement device; 13. Second measurement device; 14. Infrared detector; 15. Support; 16. First base; 17. Second Base; 18. Third Base; 19. Fourth base; 20. Heater; 21. Heating coil; 22. Supporting rod; 23. Vibratory inline feeder; 24. Sprayer; 25. Hall sensor; 26. Workbin body; 27. Guide plate; 28. Funnel; 29. Ejector rod; 30. Ejector block; 31. Third measurement device; 32. Pressing rod; 33. Heating die sleeve; 34. Connector; 35. Fourth measurement device; 36. Ejector mechanism; 37. Die.

### Detailed Description of the Embodiments

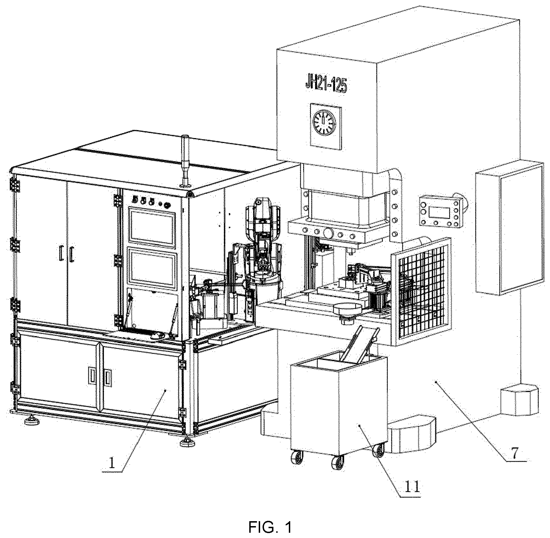

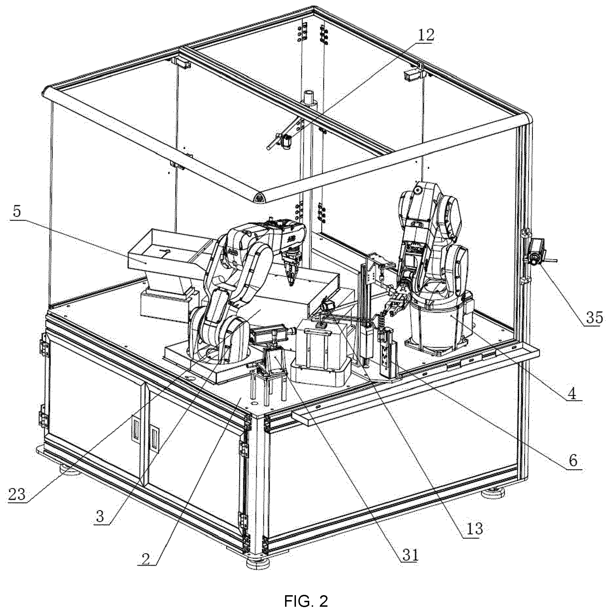

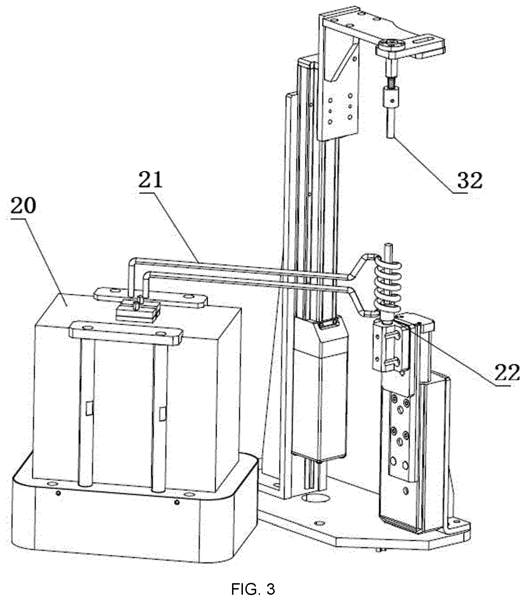

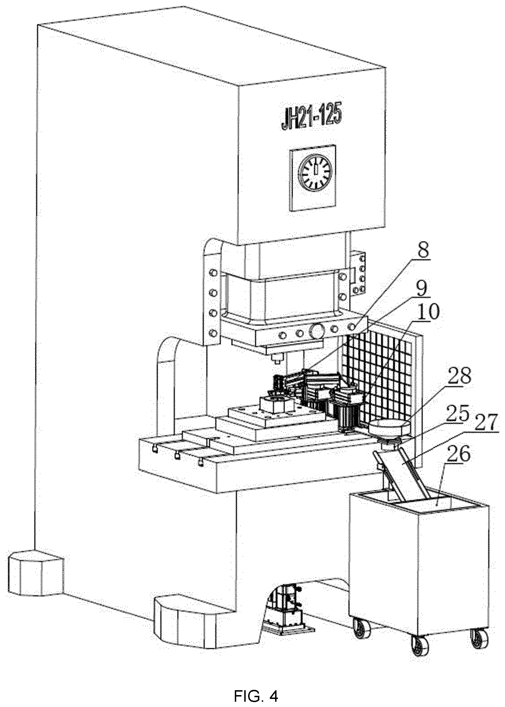

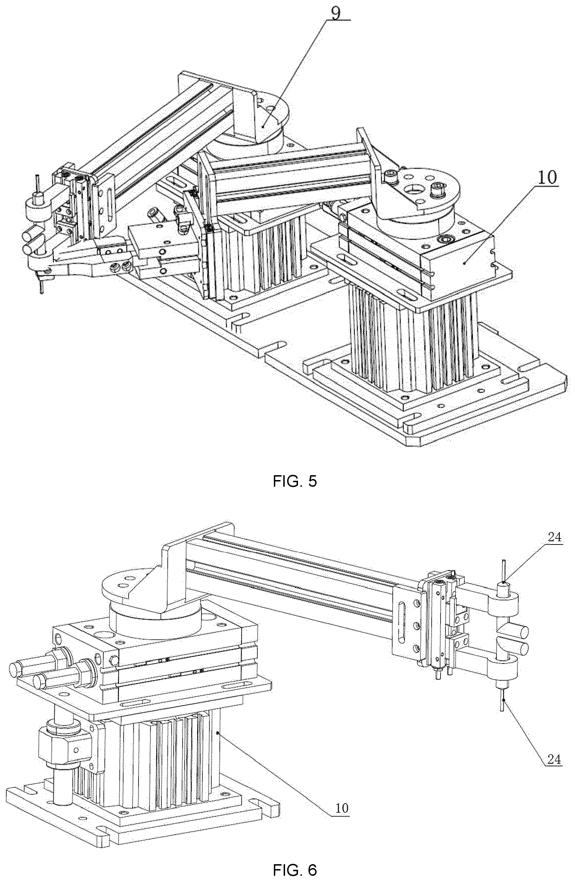

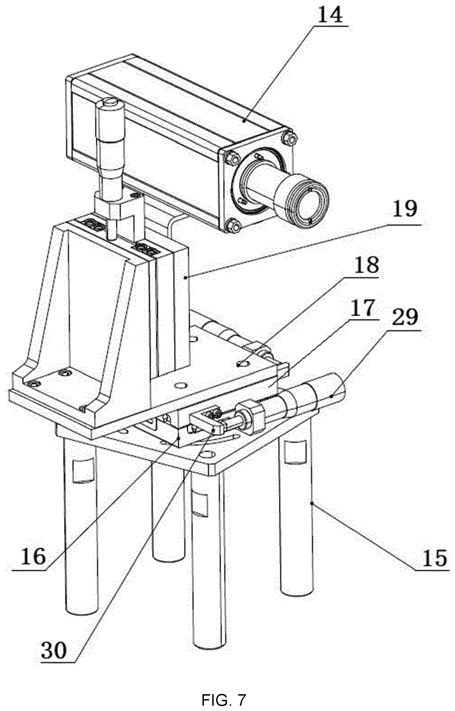

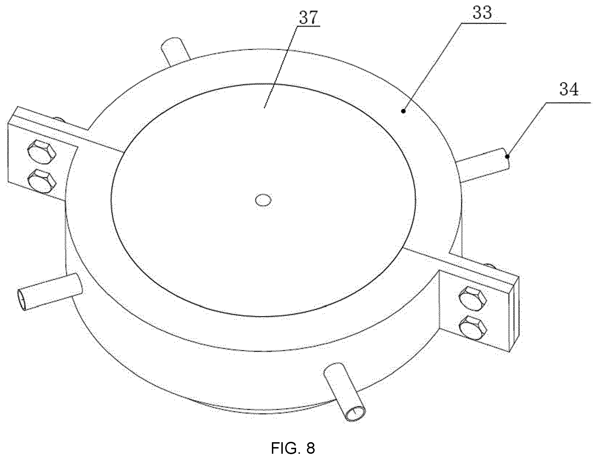

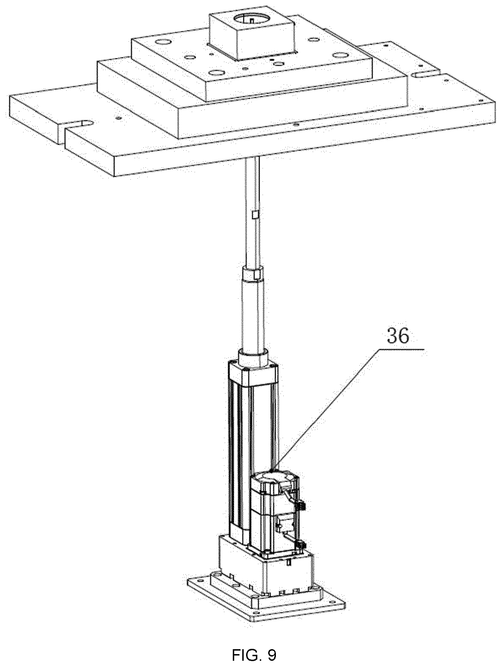

The following describes the principle and features of the present invention with reference to FIGS. 1 to 9. Examples given are merely for explaining the present invention, and are not intended to limit the scope of the present invention.

An apparatus for hot upsetting forming of a fastener comprises a heating assembly 1, a hot upsetting assembly 7, and a workbin 11.

The heating assembly 1 comprises a frame 2, a first manipulator 3, a second manipulator 4, a feeding box 5, a vibratory inline feeder 23, a heating device 6, a first measurement device 12, a second measurement device 13, a third measurement device 31, and a fourth measurement device 35.

Each of the first manipulator 3, the second manipulator 4, the feeding box 5, the vibratory inline feeder 23, the heating device 6, the first measurement device 12, the second measurement device 13, the third measurement device 31, and the fourth measurement device 35 is fixed to the frame 2. The feeding box 5 is arranged on a side of the vibratory inline feeder 23 and on a vibration device, and the vibratory inline feeder 23 is provided with a magazine for bearing workpieces. When the number of workpieces in the magazine is insufficient, the vibration device is activated to transfer the workpieces in the feeding box 5 into the magazine. The heating device 6 is provided with a heating station for heating a workpiece, and the first manipulator 3 is configured to transfer a workpiece from the magazine to the heating station of the heating device 6. The second manipulator 4 is configured to remove the workpiece from the heating station of the heating device 6. An angle of movement of the first manipulator 3 is about 60°, and an angle of movement of the second manipulator 4 is about 90°. The first manipulator 3 and the second manipulator 4 cooperate to reduce a travel and improve machining efficiency.

The first measurement device 12 is configured to measure the number and placement positions of workpieces, such that the first manipulator 3 can accurately grab disordered workpieces. The second measurement device 13 can not only select a qualified workpiece by identifying the size and head shape of the workpiece, but also control the first manipulator 3 to clamp a workpiece in a correct posture by identifying the placement position of the workpiece, so as to heat the workpiece in the same posture. The third measurement device 31 is a temperature sensor for sensing the heating temperature for a workpiece. The fourth measurement device 35 is configured to determine whether the second manipulator 4 properly places a workpiece into a die 37 of a hot upsetting machine 8. If the workpiece is properly placed into the die 37, the apparatus stops machining to avoid a safety risk when the hot upsetting machine 8 operates. Functional components of the first measurement device 12, the second measurement device 13 and the fourth measurement device 35 are all industrial cameras.

Specifically, in order to easily adjust a measurement angle of the third measurement device 31, the third measurement device 31 further comprises a support 15, a first base 16, a second base 17, a third base 18, and a fourth base 19. The first support 15 is composed of four support rods and a panel. The bottoms of the four support rods are fixedly connected to the frame 2, and the panel is fixed to the tops of the four support rods. The first base 16 is rotatably connected to the support 15, and can be fixed relative to the support 15 by means of a bolt. The second base 17 is slidably connected to the first base 16, the third base 18 is slidably connected to the second base 17, the fourth base 19 is slidably connected to the third base 18, and sliding directions of the second base 17, the third base 18 and the fourth base 19 are perpendicular to each other. The second base 17, the third base 18 and the fourth base 19 are driven in the same manner, and the second base 17 is taken as an example below for specific description. A guide rail is arranged between the first base 16 and the second base 17, and the second base 17 can slide relative to the first base 16 along the guide rail. An ejector rod 29 is screwed to the first base 16, the second base 17 is provided with an ejector block 30, and an end of the ejector rod 29 abuts against the ejector block 30. Relative positions of the first base 16 and the second base 17 can be adjusted by rotating the ejector rod 29.

Similarly, the first measurement device 12, the second measurement device 13 and the fourth measurement device 35 can also adjust the positions of the industrial cameras by means of linkage mechanisms.

The heating device 6 comprises a heater 20, a heating coil 21, a supporting rod 22, and a pressing rod 32. The heating coil 21 is electrically connected to the heater 20, and is configured to supply electric energy to the heating coil 21. The heating coil 21 is in a form of a spiral barrel, and a workpiece is placed inside the heating coil 21 in the form of a spiral barrel. The supporting rod 22 is arranged at the bottom of the heating coil 21, and the supporting rod 22 can be lifted up and down. The pressing rod 32 is arranged above the heating coil 21, and the pressing rod 32 can be lifted up and down. The pressing rod 32 and the supporting rod 22 are configured to clamp the workpiece. In this embodiment, a CEIA heater used as the heater 20 can precisely control the heating temperature, and the addition of the temperature sensor can precisely control the heating temperature and ensure the uniformity of products.

The hot upsetting assembly 7 comprises the hot upsetting machine 8, a third manipulator 9, and a fourth manipulator 10. The third manipulator 9 and the fourth manipulator 10 are fixed to the hot upsetting machine 8. The second manipulator 4 removes the workpiece from the heating coil 21 and transfers the workpiece to a hot upsetting station of the hot upsetting machine 8. The third manipulator 9 is configured to spray a lubricant into the die 37 of the hot upsetting machine 8, and the fourth manipulator 10 is configured to remove the workpiece from the hot upsetting machine 8 and place the workpiece into the workbin 11. Specifically, the die 37 is provided with a central hole for fixing a workpiece, an ejector mechanism 36 is arranged directly below the central hole, the ejector mechanism 36 is composed of an air cylinder and an ejector pin, and the ejector pin is connected to a telescopic end of the air cylinder. After hot upsetting is completed, the ejector pin ejects the workpiece, and then the fourth manipulator 10 grabs and transfers the workpiece into the workbin 11. Two sprayers 24 are connected to an end of the third manipulator 9, and the sprayers 24 can move upwards or downwards simultaneously or independently by means of the air cylinder. The sprayers 24 are configured to spray the lubricant into the die 37 of the hot upsetting machine 8. The sprayers 24 communicate with a charging barrel filled with the lubricant, and the lubricant is powdered molybdenum disulfide. The fourth measurement device 35 is arranged on a side of the hot upsetting assembly 7. A heating die sleeve 33 is connected to the outside of the die 37 of the hot upsetting machine 8, the heating die sleeve 33 is provided with a connector 34, and the connector 34 communicates with a die temperature controller to control the temperature of the die 37.

The workbin 11 comprises a workbin body 26, a guide plate 27, a funnel 28, and a Hall sensor 25. The funnel 28 is fixed to the hot upsetting machine 8, and the guide plate 27 is obliquely placed below the funnel 28, wherein a higher end of the guide plate is arranged close to the funnel 28, and a lower end of the guide plate is arranged close to the box body 26. The Hall sensor 25 is configured to identify a falling signal of a workpiece, and the apparatus is shut down when no falling of a workpiece is identified by the Hall sensor 25. Detecting no falling of a workpiece may be because the fourth manipulator 10 has not removed the workpiece from a machining position, and if the device continues operating, interference from the workpiece will occur.

In the present invention, the first manipulator 3, the second manipulator 4 and the fourth manipulator 10 cooperate to complete the feeding, turnover and discharging of workpieces with high production efficiency.

The foregoing descriptions are merely preferred embodiments of the present invention, and are not intended to limit the present invention, and any modifications, equivalent replacements and improvements may be implemented, without departing from the scope of the appended claims.

## Claims

1. An apparatus for hot upsetting forming of a fastener, wherein the apparatus comprises:
a heating assembly (1), the heating assembly (1) comprising a frame (2), and a first manipulator (3), a second manipulator (4), a vibratory inline feeder (23) and a heating device (6) that are fixed to the frame (2), a hot upsetting assembly (7), and a workbin (11), wherein the vibratory inline feeder is provided with a magazine, the heating device (6) is provided with a heating station for heating a workpiece, and the hot upsetting assembly is provided with a hot upsetting station, the first manipulator (3) is configured to transfer the workpiece from the magazine to the heating station of the heating device (6), and the second manipulator (4) is configured to transfer the workpiece from the heating station of the heating device (6) to the hot upsetting station of the hot upsetting assembly (7); and
the hot upsetting assembly (7) comprises a hot upsetting machine (8), and a die (37) for fixing the workpiece, wherein the die (37) is connected to the hot upsetting machine (8),
**characterized in that** the hot upsetting assembly further comprises
a third manipulator (9) and a fourth manipulator (10) that are fixed to the hot upsetting machine (8), the third manipulator (9) being configured to spray a lubricant into the die (37), and the fourth manipulator (10) being configured to transfer the workpiece from the die (37) to the workbin (11), and **in that** the heating assembly (1) further comprises:
a first measurement device (12), a second measurement device (13), a third measurement device (31), and a fourth measurement device (35), wherein the first measurement device (12) is arranged above the magazine, and is configured to measure the number and placement positions of workpieces; and the second measurement device (13) is configured to measure the size and orientation of a workpiece, the third measurement device (31) is configured to measure the temperature of the workpiece when a product is in the heating device (6), and the fourth measurement device (35) is arranged on a side of the hot upsetting assembly (7), and is configured to detect whether the second manipulator (4) properly places the workpiece into the die (37) of the hot upsetting machine (8).

2. The apparatus for hot upsetting forming of a fastener according to claim 1, **characterized in that** the third measurement device (31) comprises an infrared detector (14), a support (15), a first base (16), a second base (17), a third base (18), and a fourth base (19), wherein the support (15) is fixed to the frame (2), the first base (16) is rotatably connected to the support (15), the second base (17) is slidably connected to the first base (16), the third base (18) is slidably connected to the second base (17), the fourth base (19) is slidably connected to the third base (18), and sliding directions of the second base (17), the third base (18) and the fourth base (19) are perpendicular to each other; and the infrared detector (14) is fixed to the fourth base (19).

3. The apparatus for hot upsetting forming of a fastener according to claim 1, **characterized in that** the heating device (6) comprises a heater (20), a heating coil (21), a supporting rod (22), and a pressing rod (32), wherein the heating coil (21) is electrically connected to the heater (20), and wherein the heating coil (21) is in a form of a spiral barrel, wherein, in use, the workpiece is placed in the heating coil (21), the supporting rod (22) is arranged at the bottom of the heating coil (21), the pressing rod (32) is arranged on an upper portion of the heating coil (21), and the supporting rod (22) and the pressing rod (32) are movable up and down to clamp the workpiece.

4. The apparatus for hot upsetting forming of a fastener according to claim 1, **characterized in that** a vibrating feeding box (5) is arranged on a side of the vibratory inline feeder (23), and the vibrating feeding box (5) is configured to convey the workpiece into the magazine by means of vibration.

5. The apparatus for hot upsetting forming of a fastener according to claim 1, **characterized in that** two sprayers (24) are connected to an end of the third manipulator (9), the sprayers (24) are movable upwards or downwards independently, the sprayers (24) being configured to communicate with a bucket filled with the lubricant, and the sprayers (24) are configured to spray the lubricant into the die (37), the lubricant being powdered molybdenum disulfide.

6. The apparatus for hot upsetting forming of a fastener according to claim 1, **characterized in that** the workbin (11) comprises a workbin body (26), a guide plate (27), a funnel (28), and a Hall sensor (25), wherein the funnel (28) is fixed to the hot upsetting machine (8), the workbin body (26) is arranged below the funnel (28), the guide plate (27) is obliquely arranged with one end close to the funnel (28) and the other end close to the workbin body (26), and the Hall sensor (25) is configured to detect whether the workpiece falls.

7. The apparatus for hot upsetting forming of a fastener according to claim 1, **characterized in that** the apparatus further comprises a die temperature machine, an ejector mechanism (36) and a heating die sleeve (33) connected to an outer side of the die (37) of the hot upsetting machine (8), the heating die sleeve (33) being provided with a connector (34), the connector (34) being configured to communicate with a die temperature machine, the heating die sleeve (33) being configured to keep the die (37) at a constant temperature, and the ejector mechanism (36) being arranged below the die (37) of the hot upsetting machine (8).

## Patentansprüche

1. Einrichtung zum Warmstauchformen eines Verbindungselements, wobei die Einrichtung Folgendes umfasst:
eine Heizanordnung (1), wobei die Heizanordnung (1) einen Rahmen (2) und eine erste Bedieneinheit (3), eine zweite Bedieneinheit (4), eine Vibrations-Inline-Zuführvorrichtung (23) und eine Heizvorrichtung (6), die am Rahmen (2) befestigt sind, eine Warmstauchanordnung (7) und einen Arbeitsbehälter (11) umfasst, wobei die Vibrations-Inline-Zuführvorrichtung mit einem Magazin ausgestattet ist, die Heizvorrichtung (6) mit einer Heizstation zum Erwärmen eines Werkstücks ausgestattet ist, und die Warmstauchanordnung mit einer Warmstauchstation ausgestattet ist, wobei die erste Bedieneinheit (3) dazu konfiguriert ist, das Werkstück vom Magazin zur Heizstation der Heizvorrichtung (6) zu überführen, und die zweite Bedieneinheit (4) dazu konfiguriert ist, das Werkstück von der Heizstation der Heizvorrichtung (6) zur Warmstauchstation der Warmstauchanordnung (7) zu überführen; und
die Warmstauchanordnung (7) eine Warmstauchmaschine (8) und eine Matrize (37) zum Befestigen des Werkstücks umfasst, wobei die Matrize (37) mit der Warmstauchmaschine (8) verbunden ist,
**dadurch gekennzeichnet, dass** die Warmstauchanordnung ferner eine dritte Bedieneinheit (9) und eine vierte Bedieneinheit (10) umfasst, die an der Warmstauchmaschine (8) befestigt sind, wobei die dritte Bedieneinheit (9) dazu konfiguriert ist, ein Schmiermittel in die Matrize (37) zu sprühen, und die vierte Bedieneinheit (10) dazu konfiguriert ist, das Werkstück von der Matrize (37) in den Arbeitsbehälter (11) zu überführen, und
dadurch, dass die Heizanordnung (1) ferner Folgendes umfasst:
eine erste Messvorrichtung (12), eine zweite Messvorrichtung (13), eine dritte Messvorrichtung (31) und eine vierte Messvorrichtung (35), wobei die erste Messvorrichtung (12) oberhalb des Magazins angeordnet und dazu konfiguriert ist, die Anzahl und Platzierungspositionen von Werkstücken zu messen; und die zweite Messvorrichtung (13) dazu konfiguriert ist, die Größe und Ausrichtung eines Werkstücks zu messen, die dritte Messvorrichtung (31) dazu konfiguriert ist, die Temperatur des Werkstücks zu messen, wenn sich ein Produkt in der Heizvorrichtung (6) befindet, und die vierte Messvorrichtung (35) auf einer Seite der Warmstauchanordnung (7) angeordnet und dazu konfiguriert ist, zu detektieren, ob die zweite Bedieneinheit (4) das Werkstück ordnungsgemäß in die Matrize (37) der Warmstauchmaschine (8) platziert.

2. Einrichtung zum Warmstauchformen eines Verbindungselements nach Anspruch 1, **dadurch gekennzeichnet, dass** die dritte Messvorrichtung (31) einen Infrarotdetektor (14), einen Träger (15), eine erste Basis (16), eine zweite Basis (17), eine dritte Basis (18) und eine vierte Basis (19) umfasst, wobei der Träger (15) am Rahmen (2) befestigt ist, die erste Basis (16) drehbar mit dem Träger (15) verbunden ist, die zweite Basis (17) gleitbar mit der ersten Basis (16) verbunden ist, die dritte Basis (18) gleitbar mit der zweiten Basis (17) verbunden ist, die vierte Basis (19) gleitbar mit der dritten Basis (18) verbunden ist und Gleitrichtungen der zweiten Basis (17), der dritten Basis (18) und der vierten Basis (19) senkrecht zueinander verlaufen; und der Infrarotdetektor (14) an der vierten Basis (19) befestigt ist.

3. Einrichtung zum Warmstauchformen eines Verbindungselements nach Anspruch 1, **dadurch gekennzeichnet, dass** die Heizvorrichtung (6) eine Heizvorrichtung (20), eine Heizspirale (21), eine Trägerstange (22) und eine Druckstange (32) umfasst, wobei die Heizspirale (21) elektrisch mit der Heizvorrichtung (20) verbunden ist, und wobei die Heizspirale (21) in Form eines Spiralzylinders vorliegt, wobei das Werkstück im Gebrauch in die Heizspirale (21) platziert wird, die Trägerstange (22) unten an der Heizspirale (21) angeordnet ist, die Druckstange (32) an einem oberen Abschnitt der Heizspirale (21) angeordnet ist und die Trägerstange (22) und die Druckstange (32) nach oben und nach unten bewegt werden können, um das Werkstück einzuspannen.

4. Einrichtung zum Warmstauchformen eines Verbindungselements nach Anspruch 1, **dadurch gekennzeichnet, dass** ein vibrierender Zuführschlitten (5) an einer Seite des Vibrations-Inline-Zuführvorrichtung (23) angeordnet ist, und der vibrierende Zuführschlitten (5) dazu konfiguriert ist, das Werkstück mittels Vibration in das Magazin zu befördern.

5. Einrichtung zum Warmstauchformen eines Verbindungselements nach Anspruch 1, **dadurch gekennzeichnet, dass** zwei Sprühvorrichtungen (24) mit einem Ende der dritten Bedieneinheit (9) verbunden sind, die Sprühvorrichtungen (24) unabhängig voneinander nach oben oder nach unten bewegt werden können, die Sprühvorrichtungen (24) dazu konfiguriert sind, mit einer mit dem Schmiermittel gefüllten Wanne in Verbindung zu stehen, und die Sprühvorrichtungen (24) dazu konfiguriert sind, das Schmiermittel in die Matrize (37) zu sprühen, wobei das Schmiermittel pulverförmiges Molybdändisulfid ist.

6. Einrichtung zum Warmstauchformen eines Verbindungselements nach Anspruch 1, **dadurch gekennzeichnet, dass** der Arbeitsbehälter (11) einen Arbeitsbehälterkörper (26), eine Führungsplatte (27), einen Trichter (28) und einen Hall-Sensor (25) umfasst, wobei der Trichter (28) an der Warmstauchmaschine (8) befestigt ist, der Arbeitsbehälterkörper (26) unterhalb des Trichters (28) angeordnet ist, die Führungsplatte (27) schräg mit einem Ende in der Nähe des Trichters (28) und dem anderen Ende in der Nähe des Werkstückbehälterkörpers (26) angeordnet ist, und der Hall-Sensor (25) dazu konfiguriert ist, zu detektieren, ob das Werkstück herunterfällt.

7. Einrichtung zum Warmstauchformen eines Befestigungselements nach Anspruch 1, **dadurch gekennzeichnet, dass** die Einrichtung ferner eine Matrizentemperaturmaschine, einen Auswerfermechanismus (36) und einen Heizmatrizenmantel (33) umfasst, die mit einer Außenseite der Matrize (37) der Warmstauchmaschine (8) verbunden ist, wobei der Heizmatrizenmantel (33) mit einem Anschluss (34) versehen ist, wobei der Anschluss (34) dazu konfiguriert ist, mit einer Matrizentemperaturmaschine in Verbindung zu stehen, wobei der Heizmatrizenmantel (33) dazu konfiguriert ist, die Matrize (37) auf einer konstanten Temperatur zu halten, und der Auswerfermechanismus (36) unterhalb der Matrize (37) der Warmstauchmaschine (8) angeordnet ist.

## Revendications

1. Appareil de formage par refoulement à chaud d'un élément de fixation, dans lequel l'appareil comprend :
un ensemble de chauffage (1), l'ensemble de chauffage (1) comprenant un cadre (2), et un premier manipulateur (3), un deuxième manipulateur (4), un dispositif d'alimentation en ligne vibratoire (23) et un dispositif de chauffage (6) qui sont fixés au cadre (2), un ensemble de refoulement à chaud (7), et un bac de travail (11), dans lequel le dispositif d'alimentation en ligne vibratoire est pourvu d'un magasin, le dispositif de chauffage (6) est pourvu d'une station de chauffage pour chauffer une pièce, et l'ensemble de refoulement à chaud est pourvu d'une station de refoulement à chaud, le premier manipulateur (3) est configuré pour transférer la pièce du magasin à la station de chauffage du dispositif de chauffage (6), et le deuxième manipulateur (4) est configuré pour transférer la pièce de la station de chauffage du dispositif de chauffage (6) à la station de refoulement à chaud de l'ensemble de refoulement à chaud (7) ; et
l'ensemble de refoulement à chaud (7), comprend une machine de refoulement à chaud (8), et une matrice (37) pour fixer la pièce, dans lequel la matrice (37) est reliée à la machine de refoulement à chaud (8),
**caractérisé en ce que** l'ensemble de refoulement à chaud comprend en outre un troisième manipulateur (9) et un quatrième manipulateur (10) qui sont fixés à la machine de refoulement à chaud (8), le troisième manipulateur (9) étant configuré pour pulvériser un lubrifiant dans la matrice (37), et le quatrième manipulateur (10) étant configuré pour transférer la pièce de la matrice (37) au bac de travail (11), et **en ce que** l'ensemble de chauffage (1) comprend en outre :
un premier dispositif de mesure (12), un deuxième dispositif de mesure (13), un troisième dispositif de mesure (31), et un quatrième dispositif de mesure (35), dans lequel le premier dispositif de mesure (12) est agencé au-dessus du magasin, et est configuré pour mesurer le nombre et les positions de placement de pièces ; et le deuxième dispositif de mesure (13) est configuré pour mesurer la taille et l'orientation d'une pièce, le troisième dispositif de mesure (31) est configuré pour mesurer la température de la pièce lorsqu'un produit est dans le dispositif de chauffage (6), et le quatrième dispositif de mesure (35) est agencé sur un côté de l'ensemble de refoulement à chaud (7), et est configuré pour détecter si le deuxième manipulateur (4) place correctement la pièce dans la matrice (37) de la machine de refoulement à chaud (8).

2. Appareil de formage par refoulement d'un élément de fixation selon la revendication 1, **caractérisé en ce que** le troisième dispositif de mesure (31) comprend un détecteur infrarouge (14), un support (15), une première base (16), une deuxième base (17), une troisième base (18), une quatrième base (19), dans lequel le support (15) est fixé au cadre (2), la première base (16) est reliée de manière rotative au support (15), la deuxième base (17) et reliée de manière coulissante à la première base (16), la troisième base (18) est reliée de manière coulissante à la deuxième base (17), la quatrième base (19) est reliée de manière coulissante à la troisième base (18), et des directions de coulissement de la deuxième base (17), de la troisième base (18) et de la quatrième base (19) sont perpendiculaires les unes aux autres ; le détecteur infrarouge (14) est fixé à la quatrième base (19).

3. Appareil de formage par refoulement à chaud d'un élément de fixation selon la revendication 1, **caractérisé en ce que** le dispositif de chauffage (6) comprend un élément de chauffage (20), un serpentin de chauffage (21), une tige de support (22) et une tige de pression (32), dans lequel le serpentin de chauffage (21) est relié électriquement à l'élément de chauffage (20), et dans lequel le serpentin de chauffage (21) se présente sous la forme d'un cylindre en spirale, dans lequel, lors de l'utilisation, la pièce est placée dans le serpentin de chauffage (21), la tige de support (22) est agencée au niveau de la partie inférieure du serpentin de chauffage (21), la tige de pression (32) étant agencée sur une partie supérieure du serpentin de chauffage (21), et la tige de support (22) et la tige de pression (32) sont mobiles vers le haut et vers le bas pour serrer la pièce.

4. Appareil de formage par refoulement à chaud d'un élément de fixation selon la revendication 1, **caractérisé en ce qu'**une boîte d'alimentation vibrante (5) est agencée sur un côté du dispositif d'alimentation en ligne vibratoire (23), et la boîte d'alimentation vibrante (5) est configurée pour transporter la pièce dans le magasin au moyen de vibrations.

5. Appareil de formage par refoulement à chaud d'un élément de fixation selon la revendication 1, **caractérisé en ce que** deux pulvérisateurs (24) sont reliés à une extrémité du troisième manipulateur (9), les pulvérisateurs (24) sont mobiles vers le haut ou vers le bas indépendamment, les pulvérisateurs (24) étant configurés pour communiquer avec un seau rempli du lubrifiant, et les pulvérisateurs (24) sont configurés pour pulvériser le lubrifiant sur la matrice (37), le lubrifiant étant du bisulfure de molybdène en poudre.

6. Appareil de formage par refoulement à chaud d'un élément de fixation selon la revendication 1, **caractérisé en ce que** le bac de travail (11) comprend un corps de bac de travail (26), une plaque de guidage (27), un entonnoir (28) et un capteur à effet Hall (25), dans lequel l'entonnoir (28) est fixé à la machine de refoulement à chaud (8), le corps de bac de travail (26) est agencé sous l'entonnoir (28), la plaque de guidage (27) est agencée obliquement avec une extrémité proche de l'entonnoir (28) et l'autre extrémité proche du corps de bac de travail (26), et le capteur à effet Hall (25) est configuré pour détecter si la pièce tombe.

7. Appareil de formage par refoulement à chaud d'un élément de fixation selon la revendication 1, caractérisé en ce l'appareil comprend en outre une machine de température de matrice, un mécanisme d'éjection (36) et un manchon de matrice chauffant (33) relié à un côté externe de la matrice (37) de la machine de refoulement à chaud (8), le manchon de matrice chauffant (33) étant pourvu d'un connecteur (34), le connecteur (34) étant configuré pour communiquer avec une machine de température de matrice, le manchon de matrice chauffant (33) étant configuré pour maintenir la matrice (37) à une température constante, et le mécanisme d'éjection (36) étant agencé sous la matrice (37) de la machine de refoulement à chaud (8).
